# EUROPEAN PATENT SPECIFICATION

(11) **EP 2 511 999 B1**
(45) Date of publication and mention of the grant of the patent: **12.07.2017**
(21) Application number: 12159377.6
(22) Date of filing: 14.03.2012
(51) Int. Cl.: H02J 3/38, H02J 3/32, H02S 40/38

(54) **Reconfigurable power converters, systems and plants**
Umkonfigurierbare Leistungswandler, Systeme und Anlagen
Convertisseurs de puissance reconfigurables, systèmes et installations

(30) Priority: 15.04.2011 US 201161476021 P
(43) Date of publication of application: 17.10.2012
(73) Proprietor: ABB Research Ltd., 8050 Zürich (CH)
(72) Inventor: Kim, Hongrae, Cary, Noth Carolina 27519 (US); Nurmi , Jukka, 01690 Vantaa (FI); Arshad, Waqas, Raleigh, North Carolina 27606 (US)
(74) Representative: Postiglione, Ferruccio

(56) References cited:
- WO-A2-2009/155445
- US-B2- 7 834 580

## Description

### Cross Reference to Related Application(s)

This application claims the benefit of and priority to U.S. Provisional Patent Application Ser. No. 61/476,021, which was filed on 15 April 2011 and is entitled "Reconfigurable Power Converters, Systems and Plants."

### Field of the Disclosure

The present disclosure relates to power converters and systems, and more particularly to reconfigurable power converters and systems.

### Background

Examples of solar and electric power converter systems are disclosed in U.S. Patent Nos. 7,072,194; 6,914,418 and 6,590,793 and in U.S. Patent Application Publication No. 2010/0008119. Examples of battery charging using solar or photovoltaic panels and maximum power point tracking (MPPT) are disclosed in U.S. Patent Nos. 7,834,580; 6,914,418 and 6,057,665.

WO2009155445 A2 describes a power system provided with only one possible electrical connection between a DC power source and an energy storage device.

### Summary

The present invention defines a reconfigurable power system as claimed.

Reconfigurable power systems according to the invention include a DC power source, an electrical energy storage device, an AC power grid connection, a first power converter, and a second power converter. The first power converter is configured to selectively couple two or more of the DC power source, the electrical energy storage device, and the AC power grid connection. The second power converter is configured to selectively couple the electrical energy storage device to at least one of the DC power source and the first power converter. The second power converter is configured as a DC-DC converter.

In some examples, reconfigurable power converters may include a power source connection configured to couple with a DC power source, a storage device connection configured to couple with an electrical energy storage device, a grid connection configured to couple with an AC power grid, a first power converter, and a second power converter. The first power converter may be configured to selectively couple two or more of the power source connection, the storage device connection, and the grid connection. The first power converter may be configured as a DC-DC converter when coupling the power source connection to the storage device connection, a DC-AC inverter when coupling at least one of the power source connection and the storage device connection to the grid connection, and an AC-DC converter when coupling the grid connection to the storage device connection. The second power converter may be configured to selectively couple the storage device connection to at least one of the power source connection and the first power converter. The second power converter may be configured as a DC-DC converter.

In some examples, methods of operating reconfigurable power systems that include a DC power source, an electrical energy storage device, and an AC power grid connection, may include configuring a first power converter as a DC-DC converter and coupling the DC power source to the electrical energy storage device therewith, configuring the first power converter as a DC-AC inverter and coupling the DC power source to the AC power grid connection therewith while a second power converter, which may be configured as a DC-DC converter, couples the electrical energy storage device to the DC power source and the first power converter, and configuring the first power converter as a DC-AC inverter and coupling the electrical energy storage device to the AC power grid connection therewith.

### Brief Description of Drawings

Fig. 1 is a block diagram of a nonexclusive illustrative example of a reconfigurable power system.
Fig. 2 is a block diagram of a nonexclusive illustrative example of a reconfigurable power converter.
Fig. 3 is a schematic diagram of a nonexclusive illustrative example of a 3-phase asymmetric reconfigurable power system.
Fig. 4 is a schematic diagram of a nonexclusive illustrative example of a 3-phase symmetric reconfigurable power system.
Fig. 5 is a schematic diagram of a nonexclusive illustrative example of a single-phase asymmetric reconfigurable power system.
Fig. 6 is a schematic diagram of a nonexclusive illustrative example of a single-phase symmetric reconfigurable power system.
Fig. 7 is a schematic diagram of another nonexclusive illustrative example of a 3-phase asymmetric reconfigurable power system, shown with a first power converter connecting a photovoltaic DC power source to an electrical energy storage device.
Fig. 8 is a schematic diagram of the reconfigurable power system of Fig. 7, shown with the photovoltaic DC power source connected to the AC power grid by the first power converter and to the electrical energy storage device by a second power converter.
Fig. 9 is a schematic diagram of the reconfigurable power system of Fig. 7, shown with the first power converter connecting the photovoltaic DC power source to the AC power grid.
Fig. 10 is a schematic diagram of the reconfigurable power system of Fig. 7, shown with the photovoltaic DC power source connected to the AC power grid by the first power converter and the electrical energy storage device connected to the first power converter, and the AC power grid, by the second power converter.
Fig. 11 is a schematic diagram of the reconfigurable power system of Fig. 7, shown with the first power converter connecting the electrical energy storage device to the AC power grid.
Fig. 12 is a schematic diagram of the reconfigurable power system of Fig. 7, shown with the first power converter connecting the AC power grid to the electrical energy storage device.
Fig. 13 is a daily timeline illustrating a nonexclusive illustrative implementation example, which may be suitable for one of the reconfigurable power systems and/or converters disclosed herein.
Fig. 14 is a schematic diagram of another nonexclusive illustrative example of a 3-phase symmetric reconfigurable power system.
Fig. 15 is a schematic diagram of a nonexclusive illustrative example of a power plant that includes a plurality of reconfigurable power systems, such as the reconfigurable power system of Fig. 7.

### Detailed Description

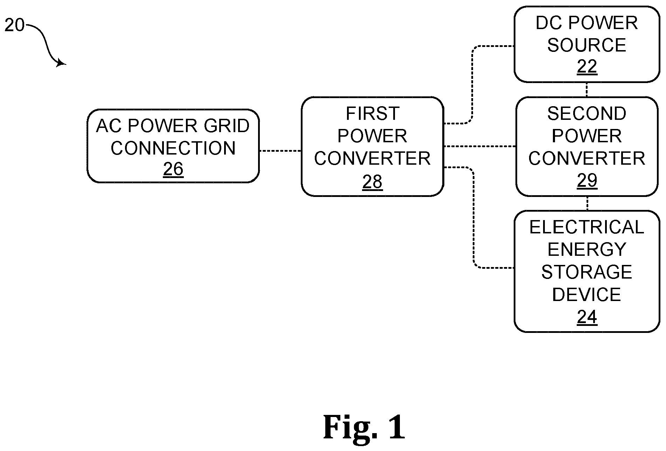

A nonexclusive illustrative example of a reconfigurable power system is shown generally at 20 in Fig. 1. In the illustrated example, the power system 20 includes a DC power source 22, an electrical energy storage device 24, a connection to an AC power grid or AC power grid connection 26, a first power converter 28, and an auxiliary or second power converter 29.

The DC power source 22 may include any DC source, such as an intermittent or non-base load source. For example, the DC power source may include at least one solar or photovoltaic (PV) cell. In some examples, at least a portion of the DC source may include other intermittent power sources such as wind or tidal power. However, some possible intermittent power sources, such as wind and tidal power, may need to be converted to DC before use with the reconfigurable power system 20.

The electrical energy storage device 24 may include any suitable combination of devices or structures capable of storing electrical energy. Nonexclusive illustrative examples of such devices include, without limitation, electrochemical cells or batteries, capacitors, supercapacitors, flywheels, or the like.

The first power converter 28 is configured to selectively couple two or more of the DC power source 22, the electrical energy storage device 24, the AC power grid connection 26, and the second power converter 29.

The second power converter 29 is configured to selectively couple the electrical energy storage device 24 to at least one of the DC power source 22 and the first power converter 28. The second power converter 29 is configured as a DC-DC converter. As will be more fully set out below, the second power converter 29 may be used in some examples where the electrical energy storage device 24 is being charged and/or discharged.

Either or both of the first power converter 28 and the second power converter 29 may include at least one switching element or device. The switching element or device may include at least one semiconductor switching device, such as a power transistor, a power MOSFET, an insulated gate bipolar transistor (IGBT), a gate turn-off thyristor (GTO), or the like. By changing the on-off duty ratio and frequency of the switching element or device, the first power converter 28 and/or the second power converter 29 can control its output voltage and frequency.

The first power converter 28 may be configured to operate in a selected one of at least three modes. For example, the first power converter 28 may be configured to selectively operate or function as a DC-AC inverter, a DC-DC converter, or an AC-DC converter. The first power converter 28 may be configured to function as a DC-AC inverter when coupling the DC power source 22 and/or the electrical energy storage device 24 to the AC power grid connection 26, such as to deliver power from the DC power source, the electrical energy storage device, or both to the AC power grid. When the first power converter 28 is configured as a DC-AC inverter that couples the DC power source 22 and the electrical energy storage device 24 to the AC power grid connection 26, the electrical energy storage device may be coupled to the DC power source and to the first power converter by way of the second power converter 29. The first power converter 28 may be configured to function as a DC-DC converter when coupling the DC power source 22 to the electrical energy storage device 24, such as to charge the electrical energy storage device. The first power converter 28 may be configured to function as an AC-DC converter when coupling the AC power grid connection 26 to the electrical energy storage device 24, such as to charge the electrical energy storage device from the AC power grid.

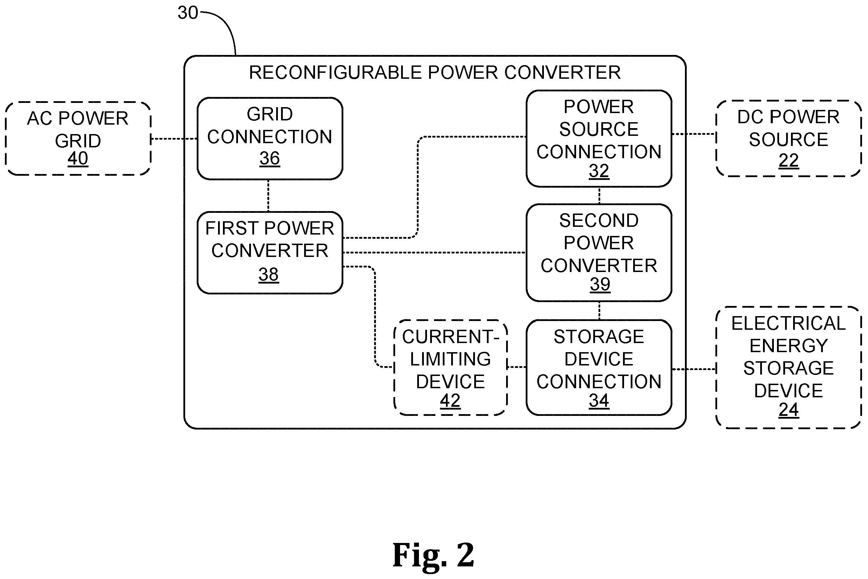

A nonexclusive illustrative example of a reconfigurable power converter is shown generally at 30 in Fig. 2. In the illustrated example, the reconfigurable power converter 30 includes a power source connection 32, a storage device connection 34, a grid connection 36, a first power converter 38, and an auxiliary or second power converter 39. The power source connection 32 may be configured to couple with a DC power source 22, the storage device connection 34 may be configured to couple with an electrical energy storage device 24, and the grid connection 36 may be configured to couple with an AC power grid 40.

The first power converter 38, which may include at least one semiconductor switching device, is configured to selectively couple two or more of the power source connection 32, the storage device connection 34, the grid connection 36, and the second power converter 39. The first power converter 38 may be selectively configured as, for example, a DC-DC converter, a DC-AC inverter or an AC-DC converter. For example, when coupling the power source connection 32 to the storage device connection 34, the first power converter 38 may be configured as a DC-DC converter. When coupling the grid connection 36 to at least one of the power source connection 32, the storage device connection 34 and the second power converter 39, the first power converter 38 may be configured as a DC-AC inverter. When coupling the grid connection 36 to the storage device connection 34, the power converter may be configured as an AC-DC converter.

The second power converter 39, which is configured as a DC-DC converter and may include at least one semiconductor switching device, is configured to selectively couple the storage device connection 34 to at least one of the power source connection 32 and the first power converter 38.

In some examples, the reconfigurable power converter 30 may include a current-limiting structure or device 42, such as a resistor. The current-limiting structure or device 42 may be configured to selectively limit inrush current to an electrical energy storage device 24 that is coupled with the storage device connection 34.

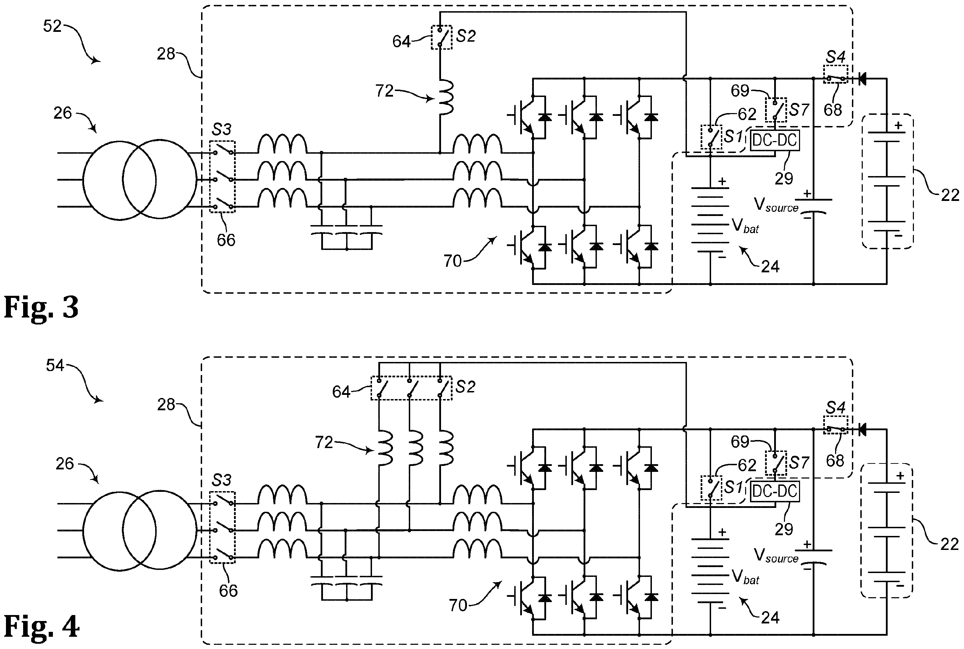

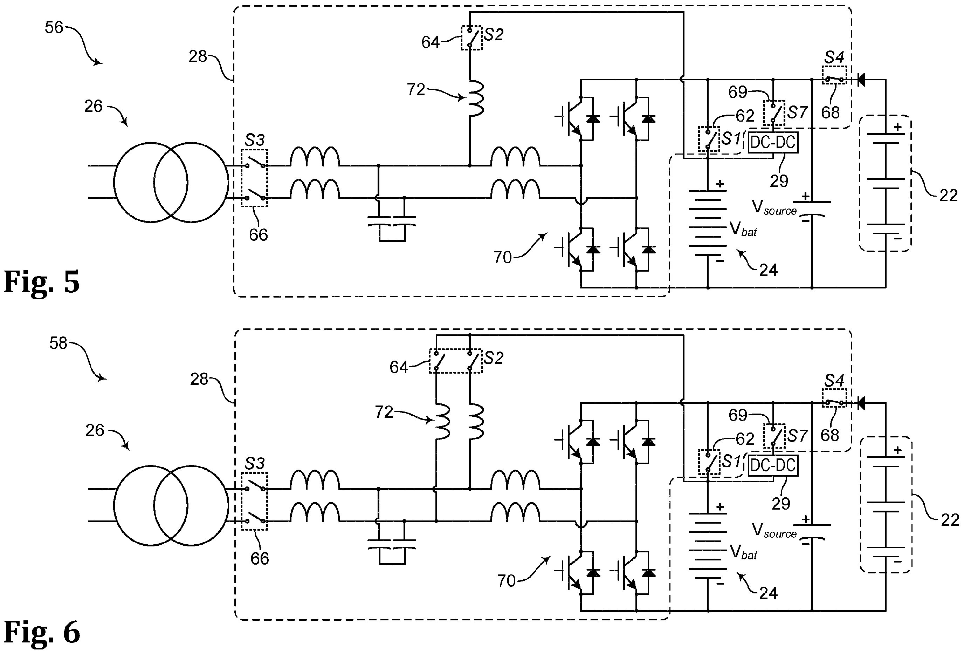

Figs. 3-6 illustrate further nonexclusive illustrative examples of reconfigurable power systems. A 3-phase asymmetric reconfigurable power system 52 is shown in Fig. 3, a 3-phase symmetric reconfigurable power system 54 is shown in Fig. 4, a single-phase asymmetric reconfigurable power system 56 is shown in Fig. 5, and a single-phase symmetric reconfigurable power system 58 is shown in Fig. 6. In the illustrated examples, each of the reconfigurable power systems 52, 54, 56, 58 includes a DC power source 22, an electrical energy storage device 24, an AC power grid connection 26, a first power converter 28 with a plurality of converter circuits 70, and a second power converter 29.

As shown in Figs. 3-6, the power converters 28 of the reconfigurable power systems 52 may include a plurality of switches 62, 64, 66, 68, 69. In some examples, the power converters 28 may optionally include at least one inductor 72 on the circuit path used to charge the electrical energy storage device 24 from the DC power source 22, as will be set out below.

With regard to the asymmetric and symmetric configurations of the reconfigurable power systems 52, 54, 56, 58 of Figs. 3-6, the asymmetric configuration may permit a reduction in manufacturing cost and/or physical size of the power converter. For example, the wiring would be simplified, the switch 64 would only need to include a single switch, and only a single inductor 72 would be needed. However, the symmetric configuration may permit more efficient utilization of the converter circuits 70 within the power converter and/or equalize the losses across all of the converter circuits 70, such as by equalizing the losses on the semiconductor switches in the power converter when using the DC power source to charge the battery, as will be set out below.

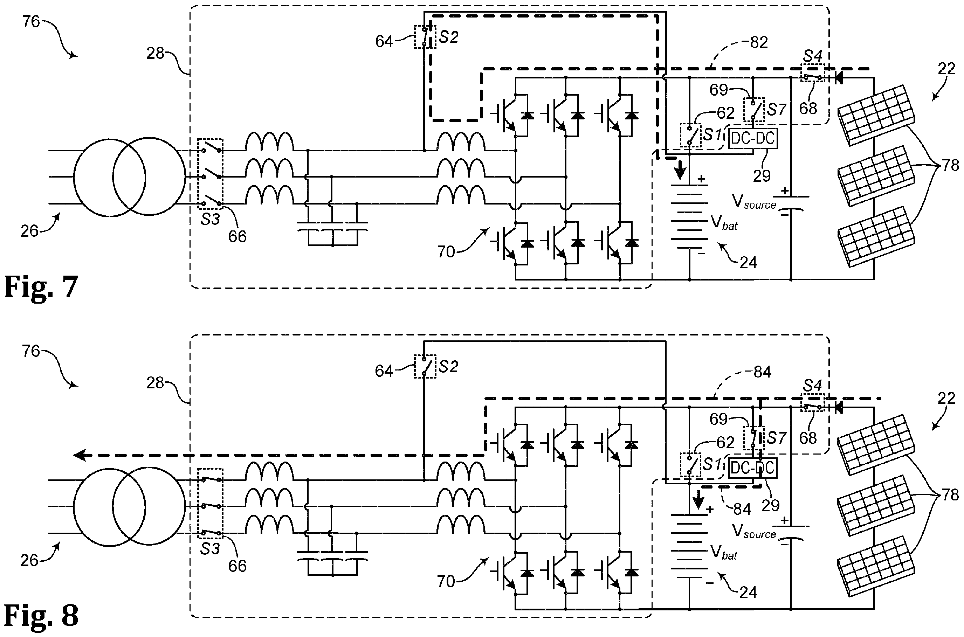

Another nonexclusive illustrative example of a reconfigurable power system is shown generally at 76 in Figs. 7-12. As shown, the reconfigurable power system 76 includes a DC power source 22, an electrical energy storage device 24, an AC power grid connection 26, a first power converter 28, and a second power converter 29. As shown in Figs. 7-12, the DC power source 22 of the reconfigurable power system 76 may include a plurality of photovoltaic cells 78, and the electrical energy storage device 24 may include a battery.

The various operating modes or configurations of a reconfigurable power system and/or power converter may be explained more fully with reference to the reconfigurable power system 76, and its first and second power converters 28, 29, as illustrated in Figs. 7-12.

In the mode illustrated in Fig. 7, the switches 64, 68 are closed, while the switches 62, 66, 69 are open, such that the first power converter 28 of the reconfigurable power system 76 is coupling the plurality of photovoltaic cells 78 of the DC power source 22 to the electrical energy storage device 24, with a power flow as generally suggested by the arrow 82. In this mode, the first power converter 28 is configured to function as a DC-DC converter such that the photovoltaic cells 78 charge the electrical energy storage device 24.

In some examples where the reconfigurable power system 76 is operating in the mode illustrated in Fig. 7, the first power converter 28 may perform maximum power point tracking (MPPT) with the photovoltaic cells 78. Under maximum power point tracking, the first power converter 28 attempts to function as a substantially optimal electrical load for the photovoltaic cells in order to extract a relatively high level of power from the photovoltaic cells. In some examples, the level of power extracted from the photovoltaic cells during maximum power point tracking may be near the maximum or even the maximum power available from the photovoltaic cells.

In the mode illustrated in Fig. 8, the switches 66, 68, 69 are closed, while the switches 62, 64 are open, such that the first power converter 28 of the reconfigurable power system 76 is coupling the plurality of photovoltaic cells 78 of the DC power source 22 to the electrical energy storage device 24 and to the AC power grid connection 26, with the electrical energy storage device 24 being coupled to the plurality of photovoltaic cells 78 and to the first power converter 28 by way of the second power converter 29. In this mode, the first power converter 28 is configured to function as a DC-AC inverter such that the photovoltaic cells 78 deliver power to the AC power grid through the first power converter 28 while charging the electrical energy storage device 24 through the second power converter 29, with a power flow as generally suggested by the arrows 84.

In some examples where the reconfigurable power system 76 is operating in the mode illustrated in Fig. 8, the first power converter 28 and/or the second power converter 29 may perform maximum power point tracking with the photovoltaic cells 78. The first power converter 28 is able to perform maximum power point tracking for the photovoltaic cells when the reconfigurable power system 76 is operating in the mode illustrated in Fig. 8 because coupling the electrical energy storage device 24 to the plurality of photovoltaic cells 78 by way of the second power converter 29 means that the voltage of the photovoltaic cells 78, *vₚᵥ*, need not be governed by the voltage of the electrical energy storage device 24, *v_{bat}.*

As may be understood, a relatively lower power may flow through the second power converter 29 to charge and/or discharge the electrical energy storage device 24 as compared to a rated power for the reconfigurable power system 76. Thus, for example, a second power converter 29 having a power rating that is only about 20% to about 30% of the rated power of the first power converter 28 and/or the reconfigurable power system 76 may be sufficient. Furthermore, inclusion of the second power converter 29 may permit more flexibility in selection and/or sizing of the electrical energy storage device 24 because Inclusion of the second power converter 29 may allow for avoiding operational modes in which the voltage of the photovoltaic cells 78, *vₚᵥ*, is governed by the voltage of the electrical energy storage device 24, *v_{bat}.*

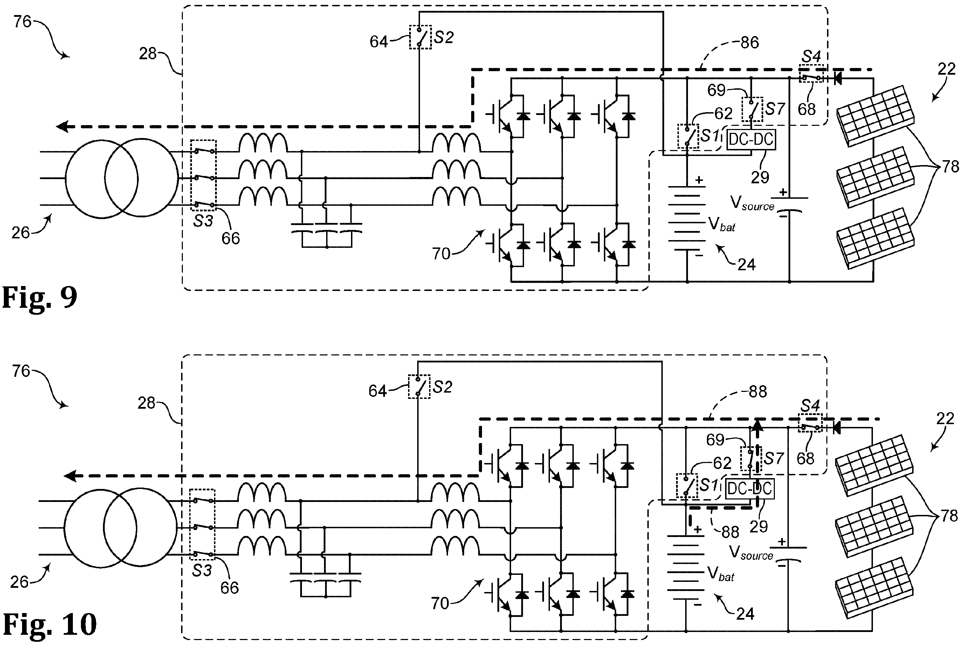

In the mode illustrated in Fig. 9, the switches 66, 68 are closed, while the switches 62, 64, 69 are open, such that the first power converter 28 of the reconfigurable power system 76 is coupling the plurality of photovoltaic cells 78 to the AC power grid connection 26. In this mode, the first power converter 28 is configured to function as a DC-AC inverter such that the photovoltaic cells 78 deliver power to the AC power grid, with a power flow as generally suggested by the arrow 86. In some examples where the reconfigurable power system 76 is operating in the mode illustrated in Fig. 9, the first power converter 28 may perform maximum power point tracking with the photovoltaic cells 78.

In the mode illustrated in Fig. 10, the switches 66, 68, 69 are closed, while the switches 62, 64 are open, such that the first power converter 28 of the reconfigurable power system 76 is coupling the plurality of photovoltaic cells 78 and the electrical energy storage device 24 to the AC power grid connection 26, with the electrical energy storage device 24 being coupled to the plurality of photovoltaic cells 78 and to the first power converter 28 by way of the second power converter 29. In this mode, the first power converter 28 is configured to function as a DC-AC inverter such that the photovoltaic cells 78 and the electrical energy storage device 24 both deliver power to the AC power grid, with a power flow as generally suggested by the arrows 88 and with the second power converter 29 discharging the electrical energy storage device 24.

In some examples where the reconfigurable power system 76 is operating in the mode illustrated in Fig. 10, the first power converter 28 may perform maximum power point tracking with the photovoltaic cells 78. The first power converter 28 is able to perform maximum power point tracking for the photovoltaic cells when the reconfigurable power system 76 is operating in the mode illustrated in Fig. 10 because discharging the electrical energy storage device 24 through the second power converter 29 to deliver power to the AC power grid means that the voltage of the photovoltaic cells 78, *vₚᵥ*, need not be governed by the voltage of the electrical energy storage device 24, *v_{bat}*.

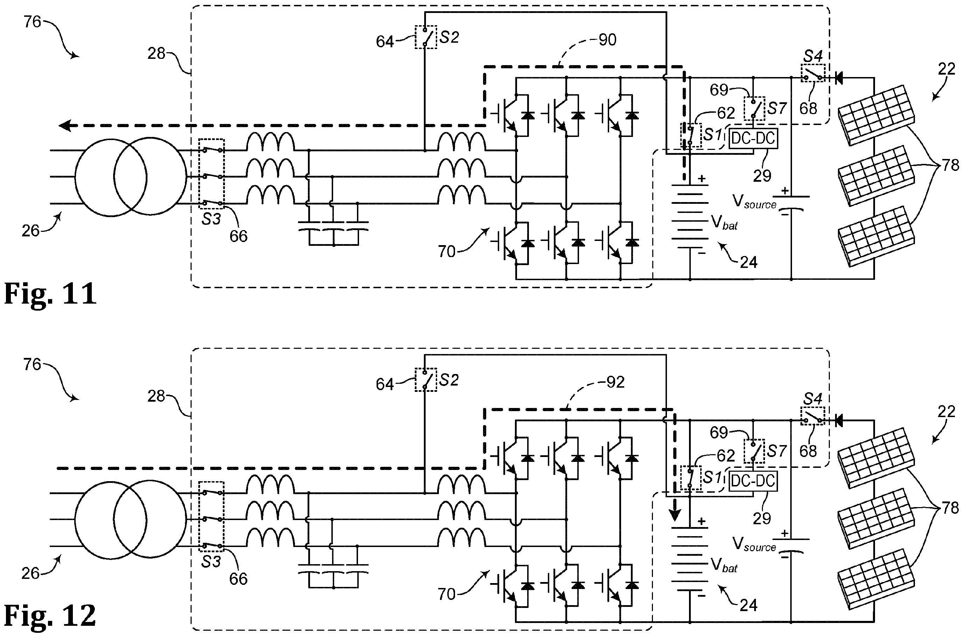

In the mode illustrated in Fig. 11, the switches 62, 66 are closed, while the switches 64, 68, 69 are open, such that the first power converter 28 of the reconfigurable power system 76 is coupling the electrical energy storage device 24 to the AC power grid connection 26. In this mode, the first power converter 28 is configured to function as a DC-AC inverter such that the electrical energy storage device 24 delivers power to the AC power grid, with a power flow as generally suggested by the arrow 90.

In the mode illustrated in Fig. 12, the switches 62, 66 are closed, while the switches 64, 68, 69 are open, such that the first power converter 28 of the reconfigurable power system 76 is coupling the electrical energy storage device 24 to the AC power grid connection 26. In this mode, the first power converter 28 is configured to function as an AC-DC converter such that the electrical energy storage device 24 is charged from the AC power grid, with a power flow as generally suggested by the arrow 92.

In some examples, peak hourly grid load demand and/or peak power consumption may generally occur, between about 4:00 PM (16:00) and about 8:00 PM (20:00). However, peak photovoltaic (PV) power generation may generally occur, for example, between about 11:00 AM (11:00) and about 3:00 PM (15:00). Thus, in some examples, hourly grid load demand may not match well with purely photovoltaic power generation or photovoltaic power generation without electrical energy storage. However, if photovoltaic power generation is combined with electrical energy storage, such as where a power system includes both photovoltaic cells and electrical energy storage devices, a better match to the grid load demand may be realized. In particular, photovoltaic energy generated before the hours of peak grid load demand can be stored in a suitable electrical energy storage device and then used during the hours of peak grid load demand.

The following paragraphs describe nonexclusive illustrative examples of methods for or of operating reconfigurable power systems, such as by selectively coupling two or more of a DC power source, an electrical energy storage device, and an AC power grid connection, using the concepts and components disclosed herein. Although the actions of the disclosed methods may be performed in the order in which they are presented below, it is within the scope of this disclosure for the actions, either alone or in various combinations, to be performed before and/or after any of the other actions.

When used as part of a power system and/or power plant, the reconfigurable power converters and reconfigurable power systems disclosed herein may be used and/or operated in any combination of modes suitable to supply power to the grid load demand at a given time of day. For example, the reconfigurable power system 76 of Figs. 7-12 may be sequentially operated in the modes illustrated in respective ones of Figs. 7-12 over the course of a normal day.

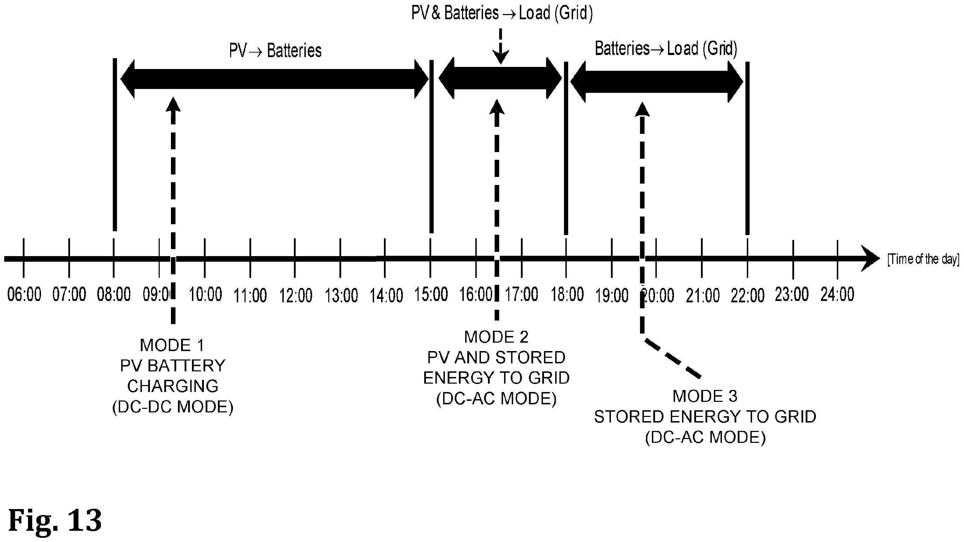

With reference to Fig. 13, a nonexclusive illustrative example of a method of operating a reconfigurable power system may include three sequential modes of operation: MODE 1, MODE 2, and MODE 3. In MODE 1, a first power converter may be configured as a DC-DC converter that couples a DC power source, which may include at least one photovoltaic or solar cell, to an electrical energy storage device to charge the electrical energy storage device, which may include a battery. The reconfigurable power system may be operated in MODE 1 between, for example, about 8:00 AM (08:00) and about 3:00 PM (15:00), which may include the times of day that provide relatively high and/or peak photovoltaic power generation, but are before the hours of peak grid load demand. In MODE 2, the first power converter may be configured as a DC-AC inverter that couples the DC power source to an AC power grid connection, while a second power converter is configured as a DC-DC converter and couples the electrical energy storage device to the DC power source and the first power converter, such that power is delivered to the AC power grid connection from both the DC power source and the energy stored in the electrical energy storage device. The reconfigurable power system may be operated in MODE 2 between, for example, about 3:00 PM (15:00) and about 6:00 PM (18:00), which may include the times of day during which peak grid load demand occurs and during which photovoltaic power generation is still available. In MODE 3, the first power converter may be configured as a DC-AC inverter that couples the electrical energy storage device to the AC power grid connection to deliver stored energy to the AC power grid. The reconfigurable power system may be operated in MODE 3 between, for example, about 6:00 PM (18:00) and about 10:00 PM (22:00), which may include the times of day where photovoltaic power generation may not be available but the grid load demand is still high enough to warrant delivering stored energy from the energy storage device to the AC power grid.

In some examples, the first power converter may perform maximum power point tracking for at least one solar or photovoltaic cell when the first power converter is configured as a DC-DC converter that couples the DC power source to the electrical energy storage device. Thus, in MODE 1, the first power converter may perform maximum power point tracking while charging a battery from a photovoltaic cell.

In some examples, methods of operating reconfigurable power systems may include configuring the first power converter as a DC-AC inverter and coupling the DC power source and/or the electrical energy storage device to the AC power grid therewith, with the second power converter coupling the electrical energy storage device to the DC power source and to the first power converter. In such examples, the first power converter may perform maximum power point tracking for at least one solar or photovoltaic cell when the first power converter is configured as a DC-AC inverter that couples the DC power source and/or the electrical energy storage device to the AC power grid. Thus, in Mode 2 the first power converter may perform maximum power point tracking while delivering power to the AC power grid from both the DC power source and the electrical energy storage device.

In some examples, methods of operating reconfigurable power systems may include configuring the first power converter as an AC-DC converter and coupling the AC power grid to the electrical energy storage device therewith. In such an example, power may be drawn from the AC power grid to charge the electrical energy storage device, such as during hours of low grid load demand.

In some examples, a capacitor may be connected in parallel with the electrical energy storage device. In such examples, the methods of operating reconfigurable power systems, such as when transitioning from the MODE 1 to the MODE 2 discussed above, may include uncoupling the DC power source from the electrical energy storage device, equalizing a voltage of the electrical energy storage device to a voltage of the capacitor, and then configuring the first power converter as a DC-AC inverter and coupling the DC power source and the electrical energy storage device to the AC power grid after equalizing the voltage of the electrical energy storage device to the voltage of the capacitor, with the electrical energy storage device being coupled to the DC power source and the first power converter by way of the second power converter.

Equalizing the voltage of the electrical energy storage device to the voltage of the capacitor may reduce or prevent potentially large inrush currents that may otherwise flow into the electrical energy storage device from the capacitor when the DC power source is connected to the electrical energy storage device, such as during a transition or change from MODE 1 to MODE 2. Reducing or preventing large inrush currents into the electrical energy storage device may reduce or prevent damage to the electrical energy storage device and/or improve its lifetime.

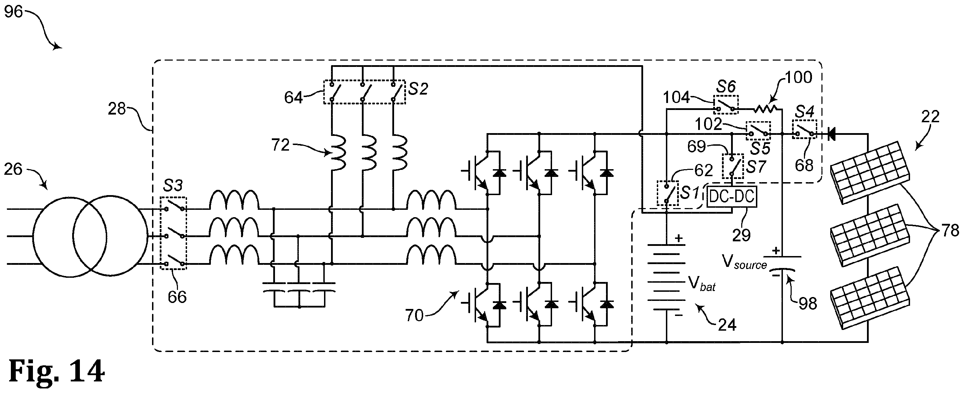

In some examples, equalizing the voltage of the electrical energy storage device to the voltage of the capacitor may include connecting the electrical energy storage device to the capacitor through a current-limiting device, such as a resistor, which may limit the current flowing into the electrical energy storage device until the voltage levels are equalized. Such an example may be further explained with reference to the nonexclusive illustrative example of a reconfigurable power system shown generally at 96 in Fig. 14. As shown, the reconfigurable power system 96 includes a DC power source 22 having a plurality of photovoltaic cells 78, an electrical energy storage device 24 that includes a battery, an AC power grid connection 26, a first power converter 28, a second power converter 29, a capacitor 98 connected in parallel with the electrical energy storage device 24 and the DC power source 22, a resistor 100, and a plurality of switches 62, 64, 66, 68, 69, 102 and 104.

In MODE 1 the power system 96 would be configured similarly to Fig. 7, with the switches 62, 66, 69 open and the switches 64, 68, 102 closed such that the first power converter 28 couples the DC power source 22 to the electrical energy storage device 24. In MODE 2 the power system 96 would be configured similarly to Fig. 10, with the switches 62, 64 open and the switches 66, 68, 69, 102 closed such that the first power converter 28 couples the DC power source 22 and the electrical energy storage device 24 to the AC power grid connection 26, with the electrical energy storage device 24 being coupled to the DC power source 22, the first power converter 28 and the AC power grid connection 26 by way of the second power converter 29. When transitioning the reconfigurable power system 96 from MODE 1 to MODE 2, the switch 102 may be opened and the switch 104 may then be closed to selectively series-couple the electrical energy storage device 24 to the capacitor 98 through the resistor 100 to equalize the voltage, *v_{bat}*, of the electrical energy storage device 24 to the voltage, *vₚᵥ*, of the capacitor 98 prior to opening the switch 104 and closing the switches 66, 69, 102 to couple the DC power source 22 and the electrical energy storage device 24 to the AC power grid connection 26, with the switch 64 being opened before closing the switch 66.

When transitioning the reconfigurable power system 96 from the MODE 2 to the MODE 3 discussed above, the switch 102 need only be opened. However, operation of the first power converter 28 and/or its converter circuits 70 may be discontinued while opening the switch 102, which may prevent or reduce transient performance.

A nonexclusive illustrative example of a power plant is shown generally at 110 in Fig. 18. In the illustrated example, the power plant 110 includes a plurality of reconfigurable power systems 76, which are connected together in parallel and assembled into the power plant 110, and an AC grid connection 112. In the illustrated example, the plurality of reconfigurable power systems 76 includes a first reconfigurable power system 114, a second reconfigurable power system 116, a third reconfigurable power system 118, and a fourth reconfigurable power system 120.

As may be understood, a suitable number of suitable reconfigurable power systems 76 may be assembled into any suitably sized power plant 110. Nonexclusive illustrative examples of suitable sizes for power plant 110 may include 50 KW, 100 KW, 200 KW, 250 KW, 500 KW, or even 1000 KW or larger. Furthermore, as may be understood, the various reconfigurable power systems 76 within the power plant 110 may be configured into suitable combinations of modes, such as those illustrated in Figs. 7-12, to more closely match the power delivered from the power plant 110 to the AC grid connection 112.

For example, when the power generated by or available from the DC power sources 22 of the reconfigurable power systems 76 of the power plant 110 is greater than the grid load demand at a particular time, the power plant 110 may be configured such that only the amount of the power requested by the AC power grid is delivered to the AC grid connection 112, with the rest of the power generated by or available from the DC power sources 22 being stored into one or more of the electrical energy storage devices 24. In such an example, at least one of the reconfigurable power systems may be configured to deliver the power generated by its DC power source to the AC power grid, at least one of the reconfigurable power systems may be configured to deliver a portion of the power generated by its DC power source to the AC power grid while storing the remainder of its generated power in its electrical energy storage device, and at least one of the reconfigurable power systems may be configured to store the power generated by its DC power source in its electrical energy storage device.

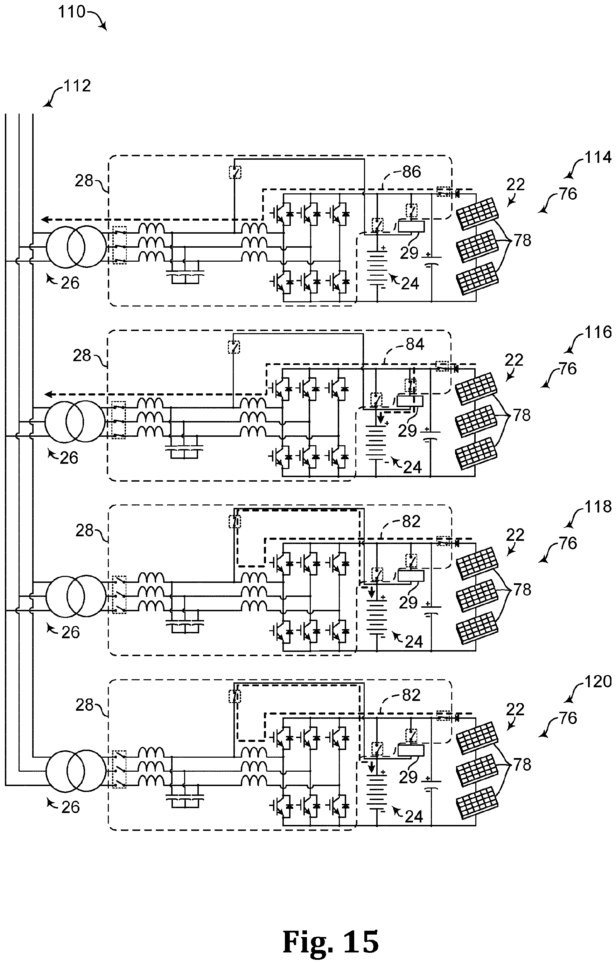

Fig. 15 illustrates an example where the power plant 110 is configured to store generated power that is in excess of the grid load demand at a particular time. In Fig. 15, the first reconfigurable power system 114 is configured as in Fig. 9, with its first power converter 28 configured as a DC-AC inverter that couples its DC power source 22 to its AC power grid connection 26 to deliver power from its DC power source to its AC power grid connection. In some examples, the first power converter 28 of the first reconfigurable power system 114 may perform maximum power point tracking for the photovoltaic cells 78 of its DC power source. The second reconfigurable power system 116 is configured as in Fig. 8, with its first power converter 28 configured as a DC-AC inverter that couples its DC power source 22 to its electrical energy storage device 24 and to its AC power grid connection 26 to deliver power from its DC power source 22 to the AC power grid and to store energy in its electrical energy storage device. As shown in Fig. 15, the electrical energy storage device 24 of the second reconfigurable power system 116 is coupled to the DC power source and the first power converter of the second reconfigurable power system 116 by way of the second power converter, which allows maximum power point tracking by the first power converter of the second reconfigurable power system 116. The third reconfigurable power system 118 and the fourth reconfigurable power system 120 are configured as in Fig. 7, with their first power converters 28 configured as DC-DC converters that couple their DC power sources 22 to their electrical energy storage devices 24 to store energy therein. In some examples, the first power converters of the third and fourth reconfigurable power system 118, 120 may perform maximum power point tracking for the photovoltaic cells 78 of their DC power sources.

The following paragraphs present a nonexclusive list of examples of how the power plant 110 may be configured to supply power to and/or otherwise interact with an AC power grid.

Where the grid load demand does not warrant delivering power from the DC power sources 22 of the reconfigurable power systems 76 of the power plant 110 to the AC power grid, all of the power generated by the DC power sources 22 may be stored in the electrical energy storage devices 24. In such an example, each of the power plant's reconfigurable power systems 76 may be configured as in Fig. 7, with its first power converter 28 configured as a DC-DC converter that couples its DC power source 22 to its electrical energy storage device 24.

Where the grid load demand equals the power generated by or available from the DC power sources 22 of the reconfigurable power systems 76 of the power plant 110, the power plant 110 may be configured such that all power generated by the DC power sources 22 is delivered to the AC grid connection 112. In such an example, each of the power plant's reconfigurable power systems 76 may be configured as in Fig. 9, with the first power converter 28 configured as a DC-AC inverter that couples its DC power source 22 to its AC grid connection 26.

Where the grid load demand exceeds the power generated by or available from the DC power sources 22 of the reconfigurable power systems 76 of the power plant 110, the power plant 110 may be configured to deliver power to the AC grid connection 112 from at least some of the electrical energy storage devices 24 in addition to the power generated by the DC power sources 22. In such an example, at least some of the power plant's reconfigurable power systems 76 may be configured as in Fig. 10, with the first power converter 28 configured as a DC-AC inverter that couples its DC power source 22 and, by way of its second power converter 29, its electrical energy storage devices 24 to its AC grid connection 26.

When the DC power sources 22 of the reconfigurable power systems 76 of the power plant 110 are unable to supply power, but a grid load demands exists, the power plant 110 may be configured such that the electrical energy storage devices 24 of at least some of the reconfigurable power systems 76 deliver power to the AC grid connection 112. In such an example, at least some of the power plant's reconfigurable power systems 76 may be configured as in Fig. 11, with the first power converter 28 configured as a DC-AC inverter that couples its electrical energy storage devices 24 to its AC power grid connection 26.

When power is available from the AC power grid, at least some of the electrical energy storage devices 24 of the reconfigurable power systems 76 of the power plant 110 may be charged using power drawn from the AC grid connection 112. In such an example, at least some of the power plant's reconfigurable power systems 76 may be configured as in Fig. 12, with the first power converter 28 configured as an AC-DC converter that couples its AC power grid connection 26 to its electrical energy storage devices 24.

The methods disclosed herein may at least partially be embodied as or take the form of the methods described herein, as well as of a transitory or non-transitory computer readable medium having a plurality of machine- or computer-readable instructions stored thereon that, when executed by a processor, carry out operations of the disclosed methods and systems. The computer-readable medium may be any medium that can contain, store, communicate, propagate, or transport program instruction for use by or in connection with the instruction execution system, apparatus, or device and may, by way of example but without limitation, be an electronic, magnetic, optical, electromagnetic, infrared, or semiconductor system, apparatus, device, or propagation medium or other suitable medium upon which the program is recorded. More specific examples (a non-exhaustive list) of such a computer-readable medium may include: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Computer program code or instructions for carrying out operations of the disclosed methods and systems may be written in any suitable programming language provided it allows achieving the previously described technical results. The instructions may be configured for execution on any system, apparatus or device having sufficient processing power and access to any required data.

It is believed that the disclosure set forth herein encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the disclosure includes all novel and non-obvious combinations and subcombinations of the various elements, features, functions and/or properties disclosed herein. Similarly, recitation in the disclosure and/or the claims of "a" or "a first" element, or the equivalent thereof, should be understood to include incorporation of one or more such elements, neither requiring nor excluding two or more such elements.

## Claims

1. A reconfigurable power system (20), comprising:
a DC power source (22);
an electrical energy storage device (24);
an AC power grid connection (26);
a first power converter (28) comprising a plurality of converter circuits (70) and configured to:
selectively couple the DC power source (22) to the electrical energy storage device (24),
selectively couple the DC power source (22) to the AC power grid connection (26), and
selectively couple the electrical energy storage device (24) to the AC power grid connection (26); and
a second power converter (29) configured to selectively couple the electrical energy storage device to at least one of the DC power source and the first power converter, wherein the second power converter is configured as a DC-DC converter,
**characterized in that**:
the first power (28) converter is operable in a first mode in which a first switch (64) and a second switch (68) are closed to provide a first closed circuit path (82) between the DC power source (22) and the electrical energy storage device (24), the first closed circuit path including a switching device of one of the converter circuits (70) and an inductor coupled with said switching device, and
the first power converter is operable in a second mode in which: the first switch (64) is opened, the second switch (68) and a third switch (69) are closed to provide a second closed circuit path (84) between the DC power source (22) and the electrical energy storage device (24), the second closed circuit path including the second power converter (29).

2. The reconfigurable power system (20) of claim 1, wherein the DC power source includes at least one photovoltaic cell (78), and the first power converter is configured to perform maximum power point tracking for the at least one photovoltaic cell when coupling the DC power source to at least one of the electrical energy storage device and the AC power grid connection.

3. The reconfigurable power system (20) of claim 1, wherein the electrical energy storage device includes a battery, or at least one of the first and second power converters includes at least one semiconductor switching device.

4. The reconfigurable power system (20) of claim 1, wherein the first power converter is configured to selectively function as a DC-DC converter, a DC-AC inverter, or an AC-DC converter.

5. The reconfigurable power system (20) of claim 4, wherein:
the first power converter is configured to function as the DC-DC converter when coupling the DC power source to the electrical energy storage device to charge the electrical energy storage device;
when the first power converter couples the DC power source and the electrical energy storage device to the AC power grid connection, the first power converter is configured to function as the DC-AC inverter and the second power converter couples the electrical energy storage device to the DC power source and the first power converter; and
the first power converter is configured to function as the AC-DC converter when coupling the AC power grid connection to the electrical energy storage device to charge the electrical energy storage device.

6. The reconfigurable power system (20) of claim 1, wherein:
the reconfigurable power system is configured to operate in a selected one of at least three modes;
in a first one of the modes the first power converter is configured as a DC-DC converter coupling the DC power source to the electrical energy storage device;
in a second one of the modes the first power converter is configured as a DC-AC inverter coupling the DC power source and the electrical energy storage device to the AC power grid connection and the second power converter couples the electrical energy storage device to the DC power source and the first power converter; and
in a third one of the modes the first power converter is configured as an AC-DC converter coupling the AC power grid connection to the electrical energy storage device.

7. The reconfigurable power system (20) of claim 1, wherein:
the reconfigurable power system is configured to operate in a selected one of at least three modes;
in a first one of the modes the first power converter is configured as a DC-DC converter coupling the DC power source to the electrical energy storage device;
in a second one of the modes the first power converter is configured as a DC-AC inverter coupling the DC power source and the electrical energy storage device to the AC power grid connection and the second power converter couples the electrical energy storage device to the DC power source and the first power converter; and
in a third one of the modes the first power converter is configured as a DC-AC inverter coupling the electrical energy storage device to the AC power grid connection.

8. The reconfigurable power system (20) of claim 7, where in a fourth one of the at least three modes the first power converter is configured as a DC-AC inverter coupling the DC power source to the AC power grid connection.

9. The reconfigurable power system (20) of claim 7, comprising:
a capacitor (98) connected in parallel with the electrical energy storage device (24) and the DC power source (22); and
a resistor (100) configured to selectively series-couple the electrical energy storage device to the capacitor.

10. A power plant (110) comprising a plurality of reconfigurable power systems (20) according to claim 1 connected together.

11. The power plant (110) of claim 10, wherein:
the plurality of the reconfigurable power systems (20) comprises a first reconfigurable power system (114) and a second reconfigurable power system (116);
in the first reconfigurable power system (114), the first power converter of the first reconfigurable power system is selectively configured as a DC-DC converter that couples the DC power source of the first reconfigurable power system to the electrical energy storage device of the first reconfigurable power system; and
in the second reconfigurable power system (116), the first power converter of the second reconfigurable power system is selectively configured as a DC-AC inverter that couples the AC power grid connection of the second reconfigurable power system to at least one of the DC power source of the second reconfigurable power system and the electrical energy storage device of the second reconfigurable power system, and the second power converter of the second reconfigurable power system couples the electrical energy storage device of the second reconfigurable power system to at least one of the DC power source of the second reconfigurable power system and the first power converter of the second reconfigurable power system.

## Patentansprüche

1. Umkonfigurierbares Stromversorgungssystem (20), umfassend:
eine Gleichstromquelle (22);
eine elektrische Energiespeichervorrichtung (24);
eine Wechselstromnetzverbindung (26);
einen ersten Stromwandler (28), der eine Mehrzahl von Wandlerschaltungen (70) umfasst und konfiguriert ist, um:
die Gleichstromquelle (22) mit der elektrischen Energiespeichervorrichtung (24) selektiv zu koppeln,
die Gleichstromquelle (22) mit der Wechselstromnetzverbindung (26) selektiv zu koppeln, und
die elektrische Energiespeichervorrichtung (24) mit der Wechselstromnetzverbindung (26) selektiv zu koppeln; und
einen zweiten Stromwandler (29), der konfiguriert ist, um die elektrische Energiespeichervorrichtung mit zumindest einem von der Gleichstromquelle und dem ersten Stromwandler selektiv zu koppeln, wobei der zweite Stromwandler als ein Gleichstrom-Gleichstrom-Wandler konfiguriert ist,
**dadurch gekennzeichnet, dass**:
der erste Stromwandler (28) in einem ersten Modus betreibbar ist, in dem ein erster Schalter (64) und ein zweiter Schalter (68) geschlossen sind, um einen ersten geschlossenen Schaltungspfad (82) zwischen der Gleichstromquelle (22) und der elektrischen Energiespeichervorrichtung (24) bereitzustellen, wobei der erste geschlossene Schaltungspfad eine Schaltvorrichtung von einer der Wandlerschaltungen (70) und einen mit der Schaltvorrichtung gekoppelten Induktor aufweist, und
der erste Stromwandler in einem zweiten Modus betreibbar ist, in dem:
der erste Schalter (64) offen ist, der zweite Schalter (68) und ein dritter Schalter (69) geschlossen sind, um einen zweiten geschlossenen Schaltungspfad (84) zwischen der Gleichstromquelle (22) und der elektrischen Energiespeichervorrichtung (24) bereitzustellen, wobei der zweite geschlossene Schaltungspfad die zweiten Stromwandler (29) aufweist.

2. Umkonfigurierbares Stromversorgungssystem (20) nach Anspruch 1, wobei die Gleichstromquelle zumindest eine photovoltaische Zelle (78) aufweist und der erste Stromwandler konfiguriert ist, um maximale Strompunktverfolgung für zumindest eine photovoltaische Zelle durchzuführen, wenn die Gleichstromquelle mit zumindest einem von der elektrischen Energiespeichervorrichtung und der Wechselstromnetzverbindung gekoppelt ist.

3. Umkonfigurierbares Stromversorgungssystem (20) nach Anspruch 1, wobei die elektrische Energiespeichervorrichtung eine Batterie aufweist oder zumindest einer von dem ersten und dem zweiten Stromwandler zumindest eine Halbleiterschaltvorrichtung aufweist.

4. Umkonfigurierbares Stromversorgungssystem (20) nach Anspruch 1, wobei der erste Stromwandler konfiguriert ist, um selektiv als ein Gleichstrom-Gleichstrom-Wandler, ein Gleichstrom-Wechselstrom-Inverter oder ein Wechselstrom-Gleichstrom-Wandler zu fungieren.

5. Umkonfigurierbares Stromversorgungssystem (20) nach Anspruch 4, wobei:
der erste Stromwandler konfiguriert ist, um als der Gleichstrom-Gleichstrom-Wandler zu fungieren, wenn die Gleichstromquelle mit der elektrischen Energiespeichervorrichtung gekoppelt ist, um die elektrische Energiespeichervorrichtung zu laden;
wenn der erste Stromwandler die Gleichstromquelle und die elektrische Energiespeichervorrichtung mit der Wechselstromnetzverbindung koppelt, der erste Stromwandler konfiguriert ist, um als der Gleichstrom-Wechselstrom-Inverter zu fungieren, und der zweite Stromwandler die elektrische Energiespeichervorrichtung mit der Gleichstromquelle und dem ersten Stromwandler koppelt; und
der erste Stromwandler konfiguriert ist, um als der Wechselstrom-Gleichstrom-Wandler zu fungieren, wenn die Wechselstromnetzverbindung mit der elektrischen Energiespeichervorrichtung gekoppelt ist, um die elektrische Energiespeichervorrichtung zu laden.

6. Umkonfigurierbares Stromversorgungssystem (20) nach Anspruch 1, wobei:
das umkonfigurierbare Stromversorgungssystem konfiguriert ist, um in einem ausgewählten von zumindest drei Modi zu arbeiten;
in einem ersten der Modi, der erste Stromwandler als ein Gleichstrom-Gleichstrom-Wandler konfiguriert ist, der die Gleichstromquelle mit der elektrischen Energiespeichervorrichtung koppelt;
in einem zweiten der Modi, der erste Stromwandler als ein Gleichstrom-Wechselstrom-Inverter konfiguriert ist, der die Gleichstromquelle und die elektrische Energiespeichervorrichtung mit der Wechselstromnetzverbindung koppelt, und der zweite Stromwandler die elektrische Energiespeichervorrichtung mit der Gleichstromquelle und dem ersten Stromwandler koppelt; und
in einem dritten der Modi, der erste Stromwandler als ein Wechselstrom-Gleichstrom-Wandler konfiguriert ist, der die Wechselstromnetzverbindung mit der elektrischen Energiespeichervorrichtung koppelt.

7. Umkonfigurierbares Stromversorgungssystem (20) nach Anspruch 1, wobei:
das umkonfigurierbare Stromversorgungssystem konfiguriert ist, um in einem ausgewählten von zumindest drei Modi zu arbeiten;
in einem ersten der Modi, der erste Stromwandler als ein Gleichstrom-Gleichstrom-Wandler konfiguriert ist, der die Gleichstromquelle mit der elektrischen Energiespeichervorrichtung koppelt;
in einem zweiten der Modi, der erste Stromwandler als ein Gleichstrom-Wechselstrom-Inverter konfiguriert ist, der die die Gleichstromquelle und die elektrische Energiespeichervorrichtung mit der Wechselstromnetzverbindung koppelt, und wobei der zweite Stromwandler die elektrische Energiespeichervorrichtung mit der Gleichstromquelle und dem ersten Stromwandler koppelt; und
in einem dritten der Modi, der erste Stromwandler als ein Gleichstrom-Wechselstrom-Inverter konfiguriert ist, der die elektrische Energiespeichervorrichtung mit der Wechselstromnetzverbindung koppelt.

8. Umkonfigurierbares Stromversorgungssystem (20) nach Anspruch 7, wobei in einem vierten der zumindest drei Modi der erste Stromwandler als ein Gleichstrom-Wechselstrom-Inverter konfiguriert ist, der die Gleichstromquelle mit der Wechselstromnetzverbindung koppelt.

9. Umkonfigurierbares Stromversorgungssystem (20) nach Anspruch 7, umfassend:
einen Kondensator (98), der parallel zu der elektrischen Energiespeichervorrichtung (24) und der Gleichstromquelle (22) verbunden ist; und
einen Widerstand (100), der konfiguriert ist, um selektiv die elektrische Energiespeichervorrichtung mit dem Kondensator in Reihe zu koppeln.

10. Kraftwerk (110), umfassend eine Mehrzahl von umkonfigurierbaren Stromversorgungssystemen (20) nach Anspruch 1, die miteinander verbunden sind.

11. Kraftwerk (110) nach Anspruch 10, wobei:
die Mehrzahl von umkonfigurierbaren Stromversorgungssystemen (20) ein erstes umkonfigurierbares Stromversorgungssystem (114) und ein zweites umkonfigurierbares Stromversorgungssystem (116) umfasst;
in dem ersten umkonfigurierbaren Stromversorgungssystem (114) der erste Stromwandler des ersten umkonfigurierbaren Stromversorgungssystems selektiv als ein Gleichstrom-Gleichstrom-Wandler konfiguriert ist, der die Gleichstromquelle des ersten umkonfigurierbaren Stromversorgungssystems mit der elektrischen Energiespeichervorrichtung des ersten umkonfigurierbaren Stromversorgungssystems koppelt; und
in dem zweiten umkonfigurierbaren Stromversorgungssystem (116) der zweite Stromwandler des zweiten umkonfigurierbaren Stromversorgungssystems selektiv als ein Gleichstrom-Wechselstrom-Inverter konfiguriert ist, der die Wechselstromnetzverbindung des zweiten umkonfigurierbaren Stromversorgungssystems mit zumindest einem von der Gleichstromquelle des zweiten umkonfigurierbaren Stromversorgungssystems und der elektrischen Energiespeichervorrichtung des zweiten umkonfigurierbaren Stromversorgungssystems koppelt, und der zweite Stromwandler des zweiten umkonfigurierbaren Stromversorgungssystems die elektrische Energiespeichervorrichtung des zweiten umkonfigurierbaren Stromversorgungssystems mit zumindest einem von der Gleichstromquelle des zweiten umkonfigurierbaren Stromversorgungssystems und dem ersten Stromwandler des zweiten umkonfigurierbaren Stromversorgungssystems koppelt.

## Revendications

1. Système de puissance reconfigurable (20) comprenant :
une source de puissance CC (22) ;
un dispositif de stockage d'énergie électrique (24) ;
une connexion de grille de puissance CA (26) ;
un premier convertisseur de puissance (28) comprenant une pluralité de circuits convertisseurs (70) et configuré pour :
coupler sélectivement la source de puissance CC (22) au dispositif de stockage d'énergie électrique (24),
coupler sélectivement la source de puissance CC (22) à la connexion de grille de puissance CA (26) et
coupler sélectivement le dispositif de stockage d'énergie électrique (24) à la connexion de grille de puissance CA (26) ; et
un second convertisseur de puissance (29) configuré pour coupler sélectivement le dispositif de stockage d'énergie électrique à au moins l'un(e) de la source de puissance CC et du premier convertisseur de puissance, dans lequel le second convertisseur de puissance est configuré en tant que convertisseur CC-CC,
**caractérisé en ce que** :
le premier convertisseur de puissance (28) peut opérer dans un premier mode dans lequel un premier commutateur (64) et un deuxième commutateur (68) sont fermés pour fournir un premier trajet de circuit fermé (82) entre la source de puissance CC (22) et le dispositif de stockage d'énergie électrique (24), le premier trajet de circuit fermé comprenant un dispositif de commutation de l'un des circuits convertisseurs (70) et un inducteur couplé audit dispositif de commutation, et
le premier convertisseur de puissance peut opérer dans un second mode dans lequel le premier commutateur (64) est ouvert, le deuxième commutateur (68) et un troisième commutateur (69) sont fermés pour fournir un second trajet de circuit fermé (84) entre la source de puissance CC (22) et le dispositif de stockage d'énergie électrique (24), le second trajet de circuit fermé comprenant le second convertisseur de puissance (29).

2. Système de puissance reconfigurable (20) selon la revendication 1, dans lequel la source de puissance CC comprend au moins une cellule photovoltaïque (78) et le premier convertisseur de puissance est configuré pour effectuer un suivi ponctuel de puissance maximale pour la au moins une cellule photovoltaïque lors du couplage de la source de puissance CC à au moins l'un(e) du dispositif de stockage d'énergie électrique et de la connexion de grille de puissance CA.

3. Système de puissance reconfigurable (20) selon la revendication 1, dans lequel le dispositif de stockage d'énergie électrique comprend une batterie ou au moins l'un des premier et second convertisseurs de puissance comprend au moins un dispositif de commutation à semi-conducteurs.

4. Système de puissance reconfigurable (20) selon la revendication 1, dans lequel le premier convertisseur de puissance est configuré pour fonctionner sélectivement comme convertisseur CC-CC, onduleur CC-CA ou convertisseur CA-CC.

5. Système de puissance reconfigurable (20) selon la revendication 4, dans lequel :
le premier convertisseur de puissance est configuré pour fonctionner comme convertisseur CC-CC lors du couplage de la source de puissance CC au dispositif de stockage d'énergie électrique pour charger le dispositif de stockage d'énergie électrique ;
lorsque le premier convertisseur de puissance couple la source de puissance CC et le dispositif de stockage d'énergie électrique à la connexion de grille de puissance CA, le premier convertisseur de puissance est configuré pour opérer comme onduleur CC-CA et le second convertisseur de puissance couple le dispositif de stockage d'énergie électrique à la source de puissance CC et au premier convertisseur de puissance ; et
le premier convertisseur de puissance est configuré pour opérer comme convertisseur CA-CC lors du couplage de la connexion de grille de puissance CA au dispositif de stockage d'énergie électrique pour charger le dispositif de stockage d'énergie électrique.

6. Système de puissance reconfigurable (20) selon la revendication 1, dans lequel :
le système de puissance reconfigurable est configuré pour opérer dans l'un sélectionné d'au moins trois modes ;
dans un premier des modes, le premier convertisseur de puissance est configuré comme un convertisseur CC-CC couplant la source de puissance CC au dispositif de stockage d'énergie électrique ;
dans un deuxième des modes, le premier convertisseur de puissance est configuré comme un onduleur CC-CA couplant la source de puissance CC et le dispositif de stockage d'énergie électrique à la connexion de grille de puissance CA et le second convertisseur de puissance couple le dispositif de stockage d'énergie électrique à la source de puissance CC et au premier convertisseur de puissance ; et
dans un troisième des modes, le premier convertisseur de puissance est configuré comme un convertisseur CA-CC couplant la connexion de grille de puissance CA au dispositif de stockage d'énergie électrique.

7. Système de puissance reconfigurable (20) selon la revendication 1, dans lequel :
le système de puissance reconfigurable est configuré pour opérer dans l'un sélectionné d'au moins trois modes ;
dans un premier des modes, le premier convertisseur de puissance est configuré comme un convertisseur CC-CC couplant la source de puissance CC au dispositif de stockage d'énergie électrique ;
dans un deuxième des modes, le premier convertisseur de puissance est configuré comme un onduleur CC-CA couplant la source de puissance CC et le dispositif de stockage d'énergie électrique à la connexion de grille de puissance CA et le second convertisseur de puissance couple le dispositif de stockage d'énergie électrique à la source de puissance CC et au premier convertisseur de puissance ; et
dans un troisième des modes, le premier convertisseur de puissance est configuré comme un onduleur CC-CA couplant le dispositif de stockage d'énergie électrique à la connexion de grille de puissance CA.

8. Système de puissance reconfigurable (20) selon la revendication 7, dans lequel, dans un quatrième des au moins trois modes, le premier convertisseur de puissance est configuré comme un onduleur CC-CA couplant la source de puissance CC à la connexion de grille de puissance CA.

9. Système de puissance reconfigurable (20) selon la revendication 7, comprenant :
un condensateur (98) connecté en parallèle avec le dispositif de stockage d'énergie électrique (24) et la source de puissance CC (22) ; et
une résistance (100) configurée pour coupler sélectivement en série le dispositif de stockage d'énergie électrique au condensateur.

10. Centrale électrique (110) comprenant une pluralité de systèmes de puissance reconfigurables (20) selon la revendication 1 connectés l'un à l'autre.

11. Centrale électrique (110) selon la revendication 10, dans laquelle :
la pluralité des systèmes de puissance reconfigurables (20) comprend un premier système de puissance reconfigurable (114) et un second système de puissance reconfigurable (116) ;
dans le premier système de puissance reconfigurable (114), le premier convertisseur de puissance du premier système de puissance reconfigurable est configuré sélectivement comme un convertisseur CC-CC qui couple la source de puissance CC du premier système de puissance reconfigurable au dispositif de stockage d'énergie électrique du premier système de puissance reconfigurable ; et
dans le second système de puissance reconfigurable (116), le premier convertisseur de puissance du second système de puissance reconfigurable est configuré sélectivement comme un onduleur CC-CA qui couple la connexion de grille de puissance CA du second système de puissance reconfigurable à au moins l'un(e) de la source de puissance CC du second système de puissance reconfigurable et du dispositif de stockage d'énergie électrique du second système de puissance reconfigurable, et le second convertisseur de puissance du second système de puissance reconfigurable couple le dispositif de stockage d'énergie électrique du second système de puissance reconfigurable à au moins l'un(e) de la source de puissance CC du second système de puissance reconfigurable et du premier convertisseur de puissance du second système de puissance reconfigurable.
